# EUROPEAN PATENT SPECIFICATION

(11) **EP 1 681 916 B1**
(45) Date of publication and mention of the grant of the patent: **12.01.2011**
(21) Application number: 04798280.6
(22) Date of filing: 12.11.2004
(51) Int. Cl.: A01G 13/10

(54) **PLANT PROTECTION DEVICE**
PFLANZENSCHUTZVORRICHTUNG
DISPOSITIF DE PROTECTION DE PLANTES

(30) Priority: 14.11.2003 FR 0350834; 18.11.2003 FR 0313469
(43) Date of publication of application: 26.07.2006
(73) Proprietor: Ahlstrom Research and Services, 38780 Pont-Evêque (FR); Ahlstrom Corporation, 00180 Helsinki (FI)
(72) Inventor: DUSSAUD, Joseph, F-38200 Vienne (FR)
(74) Representative: Ansala, Jyrki Matti
(86) International application number: PCT/FI2004/000671
(87) International publication number: WO 2005/046312

(56) References cited:
- WO-A-03/061369
- WO-A-03/079763
- FR-A- 1 468 313
- GB-A- 208 025
- GB-A- 2 104 366
- GB-A- 2 290 691

## Description

The invention relates to a plant protection device to be used especially for the nursery garden trade, particularly for vine, fruit trees, ornamental trees and for forestry.

In the field of wine growing, the young plants are products of high added-value for the nursery farmers and the wine growers. In 90 % of the cases, the trees are planted without roots, directly to open ground and they have to be protected against bad weather conditions for one to two years to restart the growing in good conditions.

In the field of fruit growing, the farmers confront a growing population of rodents such as rabbits, hares, and field-mice etc., which are able to cause extensive damage by destroying up to 100 % of a patch. In practice, in order to fight these rodents, it is necessary to protect especially the stem and the roots during a period of 2 - 3 years.

In the rest of this text, the term "plants" denotes young sprouts cultivated in horticultural, viticultural or arboreal nurseries, as well as young trees or older trees, the growth of which in terms of roots and leaves remains weak, in practice in the order of 50 - 120 cm.

To protect the plants during their growth from pests, especially from rodents, but also to an extent from the attacks of insects and fungi as well as the spread of weed, several types of solutions have at present been used.

The first solution is spraying phytosanitary products on the plant or to the close vicinity thereof. The main inconvenience is that these phytosanitary products are, mostly, noxious and consequently considered as polluting agents. This is why the health authorities take at the moment measures aiming to limit the use of this type of products.

A second alternative solution is to protect the plant mechanically by means of plastic tubes or pots, which are totally or partially buried in the soil. Even if these devices fulfil efficiently their plant protection function, we are, however, confronted with a certain number of inconveniences. First of all, the UV radiation (photolysis) weakens the mechanical characteristics of the tube, which finally breaks, and thus does not fulfil anymore the protection function. Moreover, as the tube is not transparent it considerably slows down the photosynthesis process. Further and moreover, these plastic materials are not biodegradable. Consequently, the farmer has two choices. He can take the tubes out of the ground, but this operation will cause a considerable extra cost. Consequently, and most of the time, the tubes remain in the soil, which leads to accumulation of these residues, again as pollutants, which have a direct impact on the environment.

Document FR-A-1468313 describes small bags or pouch packets for protecting fruits directly in the tree. In practice, bags or pouches are made of parchmentized paper and have the disadvantage of not being transparent enough to sun beams.

Document GB-A-2104366 describes a young plant protection device, which comprises a plurality of side panel members of such a configuration as to form a multisided cylindrical tube open at the top and bottom, the device being formed of a layer of corrugated paper and a layer of smooth paper.

The problem that the invention thus proposes to solve is how to develop means for protecting the plants, which fulfil the following objectives:
- 100 % biodegradability
- mechanical resistance adapted to repeated sprinkling or rain
- mechanical resistance to UV radiation
- wind resistance
- sufficient translucence to assure the photosynthesis
- limited cost.

It came as a surprise to the applicant that parchmentizing or vulcanizing treatments enhance the mechanical properties of tubes made from annual plant fibres instead of traditional paper fibres by modifying the optical properties, such as decreasing opacity and increasing transparency.

The vulcanizing and parchmentizing operations are well known by those skilled in the art and will thus not be described here in more detail.

The main point is that the parchmentizing and vulcanizing are operations consisting in treating a fibrous support by immersion, in sulfuric acid (parchmentizing) or in zinc chloride (vulcanizing). This immersion has the effect of forming a cellulose gel to the surface of the fibrous support, giving it after neutralizing, washing and drying, improved greaseproofing, waterproofing, translucence and mechanical resistance characteristics.

Consequently, the invention relates to a plant protection device in the form of a tube, which is **characterized in that** it consists at least of one parchmentized or vulcanized fibrous support in the form of a sheet containing annual fibres, the device being biodegradable.

According to a first characteristic of the invention, the fibrous support to be parchmentized or vulcanized contains at least 20 % by weight of annual fibres, advantageously at least 50 %, preferably 75 % by weight of annual fibres. In practice, the annual plant fibres are fibres such as cotton, ramie, jute, flax, sisal hemp, abaca, kenaf etc.

Naturally, the fibrous support may contain other fibres such as unbleached or bleached vegetable fibres obtained from coniferous or deciduous plants; and synthetic fibres such as e.g. viscose, polyvinyl alcohol, these fibres being biodegradable and can be used by themselves or as a mixture, the support being able to non-exclusively comprise additives such as foodstuff colour, carbon black. In practice, the mass of the parchmentized or vulcanized support is between 50 g/m² and 250 g/m², advantageously 100 g/m².

However, the fibrous support can consist of traditional paper-making fibres e.g. of eucalyptus fibres, and this according to the desired mechanical characteristics.

As already said, the parchmentized or vulcanized fibrous support making up the protection device has a grammage of between 50 and 250 g/m², advantageously 100 g/m², these values corresponding to the grammage of the unitary sheet. In fact, in certain embodiments mentioned in the rest of the description, the device comprises several parchmentized or vulcanized sheets or supports.

In practice, the protection device is totally or partially buried in the soil. When a part of the device is out of the soil, e.g. for protecting the young plant against weather conditions, especially against the wind, the device has to be sufficiently transparent for allowing the photosynthesis.

Consequently, and according to another characteristic, the tubular device of the invention has a transparency of 15 % - 25 %, advantageously of 20 %.

To expel flying insects and to provide the fibrous support with fungicidal, fungistatic or bactericidal properties, the vulcanized or parchmentized support is advantageously covered with fungicidal, fungistatic or bactericidal repellent products, preferably non-toxic products, especially essential oils (geraniol, thyme essence, thymol etc.) sprayed to the surface of the support.

The protection device can be produced in different forms according to its use.

When young sprouts are to be protected, the leaves of which have a small diameter, in practice less than 50 cm, the device has, according to a first embodiment, the form of a core, or sleeve, obtained by rolling spirally the parchmentized or vulcanized fibrous support.

The manufacturing technique of cores is perfectly known by an person skilled in the art and will not be described here in more detail. It mainly consists in winding spirally, around a metal tube, a first sheet transferred by a belt by friction on the fixed metal tube. Then, on the first sheet a second sheet is wound and so on, until the desired number has been reached, the lower face of each sheet being coated with adhesive to ensure the cohesion of the assembly. Moreover and in practice, each sheet is wound so that the spirals formed of the same sheet are not superposed.

According to the desired rigidity, the core is more or less thick, nevertheless respecting at the same time the transparency characteristics such as those described above.

In this way and according to a first embodiment, the core produced by superposing 2 - 15, advantageously 5, parchmentized or vulcanized sheets allowing obtaining an especially rigid product, the lower face of each sheet being covered with adhesive.

In practice, the final product has a mass of between 230 g/m² and 1500 g/m², preferably of 500 g/m².

The diameter of the core varies, of course, according to the diameter of the plant to be protected. According to a characteristic of the invention, the rigid cores such as those described above, have a diameter of at least 120 mm, advantageously 360 mm, and even up to 480 mm.

According to a second embodiment, the core is supple in order to allow the storage thereof by laterally crushing the core. In this case, instead of 2 - 15 parchmentized or vulcanized sheets, 2 - 5 sheets, advantageously 3 sheets, are provided. In practice, this type of core has a grammage of between 300 and 400 g/m², advantageously of between 350 and 360 g/m².

To guarantee the complete biodegradability of the device of the invention, the adhesive used to guarantee the adhesion of the sheets to each other consists exclusively of biodegradable polymers chosen from the group comprising polyvinyl alcohol, natural rubber, starch, gelatine, polysaccharides, arabic gum, alginate and carboxymethyl cellulose.

In an advantageous embodiment, the adhesive further contains a repellent agent, e.g. an essential oil intended to expel insects and rodents, and possibly fungicidal and bactericidal products. In fact, the repellent agent and the fungicidal and bactericidal products represent 0.5 % to 20 % by weight of the adhesive, and preferably 5 %.

When the device is used more specifically to protect taller trees, the dimensions and flexibility of the above-described cores are not applicable.

Consequently and in another embodiment, the fibrous support making up the protection device of the invention is of corrugated board type and has the form of a folding corrugated sheet, the dimensions of which vary according to the diameter and the height of the plant to be protected.

In an advantageous embodiment, the corrugated parchmentized and/or vulcanized sheet is glued between two parchmentized and/or vulcanised sheets. In this case, the adhesive is also biodegradable like the adhesive described above.

To facilitate the bending into a tube form, the sheet is provided with grooves.

In the preceding embodiments, the device according to the invention is constituted of an individual core the dimensions of which are adapted according to the plant to be protected. When the device is used for the protection of small trees, the use is facilitated by making a cut along the entire length thereof. After that, the tube is positioned facing the stem, the free ends of the tube are spread open, the stem is surrounded, and the tube ends are released around the stem. In this case, it is not practical to place the tube in position by lowering it down from the top of the tree.

In an advantageous embodiment, taking into consideration the possible growth of the stem of the tree, the device according to the invention is formed of at least two concentric tubes, having a cut extending throughout the entire length, in practice linearly. When placing in position, the concentric tubes are placed in position the same way as described earlier, in other words facing the stem, so that the cuts are opposite one another. Then the free ends are spread open, placed around the stem and the free ends bend to surround the tree. Finally, to allow the increase in the diameter of the tube in relation to the growth of the tree size, the concentric tubes roll on top of each other so that the cuts are not opposite one another.

Regardless of the number of tubes, it is also possible, in view of the growth of the tree, to make a pre-cut on a part or the entire length of the tube.

In a further embodiment, the device of the invention is a pot allowing, besides the protection, of course transportation of young sprouts.

In practice, the pot is a core such as described above, one end of which is folded inwards to form a bottom. Of course, the core will consist of several sheets according to the desired rigidity of the pot.

The invention also relates to a plant protection process consisting in positioning the above-described device around the plant.

Finally, the object of the invention is a tube made of a parchmentized or vulcanized fibrous support in the form of a sheet.

The invention and the advantages, which originate therefrom will become more apparent from the following illustrative examples.

### 1, Rigid core

### Manufacturing of the core

Cores are made on a core manufacturing machine from 10 reels of parchmentized paper having a width of 205 mm, referred to as Sulfax white, of 100 g/m², consisting 80 % of eucalyptus and 20 % of flax fibres.

These sheets are glued to each other with biodegradable adhesive consisting 70 % of polyvinyl alcohol and 30 % of natural latex.

0.2 % of geraniol, 0.1 % of thyme essence (repulsive agent) and 0.7 % of bone oil, the trade name of which is "Decamp", is introduced into this adhesive.

This mixture forms a repulsive agent against rabbits, hares and cervidae.

### Characteristics of the core

The final product of 1225 g/m² is composed of:
- 1000 g/m² of parchmentized paper
- 225 g/m² of dry adhesive.

| | | |
|---|---|---|
| Brightness: | -R457 | 70.0 % |
| | -CIE | 61.2 % |
| Opacity: | | 94.5 % |
| 0.26 | | 16.0 % |

The thickness of the core is 6 mm, the diameter 360 mm and the height 1.20 m.

The obtained product is rigid and forms an efficient protection for bushes against cervidae and rodents.

### 2. Flexible core

### Manufacturing of the core

Cores are made on a core manufacturing machine from 3 reels of parchmentized paper (reference Sulfax) of 100 g/m², the width of which is 205 mm, consisting 80 % of eucalyptus and 20 % of flax fibres.

These sheets are glued to each other with a biodegradable adhesive composed of 70 % of polyvinyl alcohol and 30 % of natural latex.

0.2 % of geraniol, 0.1 % of thyme essence (repulsive) and 0.7 % of bone oil, the trade name of which is "Decamp", is introduced to this adhesive.

After being cut to the desired length, the obtained core is then crushed in its diameter between two metal rolls to obtain a flat sleeve, which can be easily stored flat in cardboard boxes or strapped pallets. When in use, the sleeve is brought back into its cylindrical form by pressing the sides inwards at the two folding lines of the sleeve.

### Characteristics of the core

The final product of 350 g/m² is composed of:
- 300 g/m² of parchmentized paper
- 50 g/m² of dry adhesive.

The thickness of the core is 0.8 mm, the diameter 140 mm and the length 0.60m.

| | | |
|---|---|---|
| Brightness: | -R457 | 72.6 % |
| | -CIE | 62.1 % |
| Opacity: | | 87.5 % |
| Transparency | | 25.8 % |

Then the obtained product is reset to its cylindrical form so that it can be placed lightly over the plants (coniferous plants, fruit trees) to assure the protection thereof against rodents.

### 3. Corrugated sheet

### Manufacturing process

Corrugated paper composed of microflute, the thickness of which is 1 mm, of parchmentized paper of 100 g/m² and of two coatings of parchmentized paper of 100 g/m², is manufactured on a suitable machine.

The adhesion of the coatings on the microflute is made with an adhesive, the composition of which is similar to the one described in the example 1.

The corrugated parchmentized paper sheets are then cut and provided with grooves for allowing adapting this product to the protection of plants.

At the two ends of the paper, fastening means are provided in the form of a tab allowing maintaining the material in its place. The plant is wrapped up easily and especially without causing injuries to the trunk, the leaves or the roots.

### Characteristics

The final product has an m² -mass of 315 g/m², composed of
- 300 g/m² of parchmentized paper
- 15 g/m² of dry adhesive.

| | | |
|---|---|---|
| Brightness: | -R457 | 73.8 % |
| | -CIE | 62.8 % |
| Opacity: | | 87.6 % |
| Transparency | | 27.5 % |

### 4. Pot

### Manufacturing process

Cores are made on a core manufacturing machine from 4 reels of parchmentized paper, the width of which is 205 mm, referenced Sulfax white, of 100 g/m², composed 80 % of eucalyptus and 20 % of flax fibres.

### Mechanical characteristics

The final product has a mass of 440 g/m², composed of
- 400 g/m² of parchmentized paper
- 40 g/m² of dry adhesive.

The thickness of the pot is 1.2 mm and the diameter 6 cm. The bottom of the pot is closed by folding inwards one of the ends of the core.

### Optical characteristics

| | | |
|---|---|---|
| Brightness: | -R457 | 70.6 % |
| | -CIE | 61.4 % |
| Opacity: | | 89.9 % |
| Transparency | | 22 % |

### Uses

The pot thus created will have two functions:
1. to serve as a cultivation pot from seeds; thus it can be used in nurseries,
2. owing to its biodegradable properties, the pot can be placed directly to the ground without disturbing the growth of the plant.

## Claims

1. A plant protection device in the form of a tube, **characterised in that** it consists of at least one parchmentized or vulcanized fibrous support in the form of a sheet containing annual fibres, the device being biodegradable.

2. A device according to claim 1, **characterised in that** it consists in two concentric tubes.

3. A device according to claim 1, **characterised in that** there is a cut in the tube along the entire length thereof.

4. A device according to claim 1, **characterised in that** there is a pre-cut in the tube along at least a part of the length or the entire length thereof.

5. A device according to claim 1, **characterised in that** the fibrous support contains at least 20 %, advantageously at least 50 %, preferably 75 % by weight of annual plant fibres.

6. A plant protection device according to claim 1, **characterised in that** the fibrous support contains among other things unbleached or bleached vegetal fibres obtained from coniferous or deciduous plants and synthetic fibres, such as e.g. viscose, by themselves or as a mixture.

7. A plant protection device according to claim 1, **characterised in that** the parchmentized or vulcanized fibrous support has a grammage of 50 - 250 g/m², advantageously 100 g/m².

8. A plant protection device according to claim 1, **characterised in that** it has a transparency of between 15 % and 25 %, advantageously of 20 %.

9. A plant protection device according to claim 1, **characterised in that** the vulcanized or parchmentized fibrous support is covered with several fungistatic, fungicidal or bactericidal repulsive products sprayed to the surface thereof.

10. A plant protection device according to claim 1, **characterised in that** it is a core produced by rolling spirally the parchmentized or vulcanized fibrous support.

11. A plant protection device according to claim 10, **characterised in that** the core is produced by superposing 2 - 15, advantageously 5, parchmentized or vulcanized sheets, the lower face of each sheet being coated with adhesive.

12. A plant protection device according to claim 11, **characterised in that** the core has a diameter of at least 120 mm, advantageously of 360 mm.

13. A plant protection device according to claim 10, **characterised in that** the core is produced by superposing 2 - 5, advantageously 3, parchmentized or vulcanized sheets, the lower face of each sheet being coated with adhesive.

14. A plant protection device according to claim 13, **characterised in that** the core has a grammage of 300 - 400 g/m², advantageously of 350 - 360 g/m².

15. A plant protection device according either of claims 11 or 13, **characterised in that** the adhesive consists exclusively of biodegradable polymers chosen from the group comprising polyvinyl alcohol, natural rubber, starch, gelatine, polysaccharides, arabic gum, alginate and carboxymethyl cellulose.

16. A plant protection device according to claim 1, **characterised in that** the fibrous support is a folding corrugated sheet.

17. A plant protection device according to claim 16, **characterised in that** the corrugated sheet is glued between two parchmentized and/or vulcanized sheets.

18. A plant protection device according to claim 1, **characterised in that** the fibrous support has the form of a pot, the bottom of which is obtained by folding the free end of a core inwards.

19. A plant protection process consisting in positioning the device forming the subject of one of claims 1 to 18 around the plant.

## Patentansprüche

1. Pflanzenschutzvorrichtung in Form eines Rohrs, **dadurch gekennzeichnet, dass** sie zumindest einen pergamentierten oder vulkanisierten faserigen Träger in Form eines Bogens umfasst, der Fasern aus Einjahrespflanzen enthält, welche Vorrichtung bioabbaubar ist.

2. Vorrichtung nach Patentanspruch 1, **dadurch gekennzeichnet, dass** sie zwei konzentrische Rohre umfasst.

3. Vorrichtung nach Patentanspruch 1, **dadurch gekennzeichnet, dass** das Rohr einen Einschnitt an seiner gesamten Länge aufweist.

4. Vorrichtung nach Patentanspruch 1, **dadurch gekennzeichnet, dass** das Rohr einen Vorschnitt an zumindest einem Teil der Länge oder seiner gesamten Länge aufweist.

5. Vorrichtung nach Patentanspruch 1, **dadurch gekennzeichnet, dass** der faserige Träger zumindest 20 %, vorteilhaft zumindest 50 %, bevorzugt 75 % Gewichtsprozent Fasern aus Einjahrespflanzen enthält.

6. Pflanzenschutzvorrichtung nach Patentanspruch 1, **dadurch gekennzeichnet, dass** der faserige Träger unter anderem ungebleichte oder gebleichte, aus Nadel- oder Laubpflanzen gewonnene Pflanzenfasern, und synthetischen Fasern, wie z. B. Viskose, als solche oder als Mischung enthält.

7. Pflanzenschutzvorrichtung nach Patentanspruch 1, **dadurch gekennzeichnet, dass** der pergamentierte oder vulkanisierte, faserige Träger ein Flächengewicht von 50 bis 250 g/m², vorteilhaft 100 g/m², hat.

8. Pflanzenschutzvorrichtung nach Patentanspruch 1, **dadurch gekennzeichnet, dass** sie eine Transparenz zwischen 15 % und 25 %, vorteilhaft von 20 %, hat.

9. Pflanzenschutzvorrichtung nach Patentanspruch 1, **dadurch gekennzeichnet, dass** der vulkanisierte oder pergamentierte faserige Träger mit mehreren fungistatischen oder bakteriziden abstoßenden Produkten bedeckt ist, die auf seine Oberfläche gespritzt sind.

10. Pflanzenschutzvorrichtung nach Patentanspruch 1, **dadurch gekennzeichnet, dass** sie eine Hülse ist, die durch spiraliges Zusammenrollen des pergamentierten oder vulkanisierten faserigen Trägers produziert wird.

11. Pflanzenschutzvorrichtung nach Patentanspruch 10, **dadurch gekennzeichnet, dass** die Hülse durch Überlagerung von 2 bis 15, vorteilhaft 5, pergamentierten oder vulkanisierten Bögen hergestellt wird, wobei die untere Seite eines jeden Bogens mit Klebstoff beschichtet ist.

12. Pflanzenschutzvorrichtung nach Patentanspruch 11, **dadurch gekennzeichnet, dass** die Hülse einen Durchmesser von zumindest 120 mm, vorteilhaft von 360 mm, aufweist.

13. Pflanzenschutzvorrichtung nach Patentanspruch 10, **dadurch gekennzeichnet, dass** die Hülse durch Überlagerung von 2 bis 5, vorteilhaft 3, pergamentierten oder vulkanisierten Bögen hergestellt wird, wobei die untere Seite eines jeden Bogens mit Klebstoff beschichtet ist.

14. Pflanzenschutzvorrichtung nach Patentanspruch 13, **dadurch gekennzeichnet, dass** die Hülse ein Flächengewicht von 300 bis 400 g/m², vorteilhaft von 350 bis 360 g/m², hat.

15. Pflanzenschutzvorrichtung nach Patentanspruch 11 oder 13, **dadurch gekennzeichnet, dass** der Klebstoff ausschließlich aus bioabbaubaren Polymeren besteht, die aus der Gruppe gewählt sind, die Polyvinylalkohol, Naturgummi, Stärke, Gelatine, Polysaccharide, Gummiarabikum, Alginat und Carboxymethylcellulose umfasst.

16. Pflanzenschutzvorrichtung nach Patentanspruch 1, **dadurch gekennzeichnet, dass** der faserige Träger eine faltbare Wellplatte ist.

17. Pflanzenschutzvorrichtung nach Patentanspruch 16, **dadurch gekennzeichnet, dass** die Wellplatte zwischen zwei pergamentierten und/oder vulkanisierten Bögen geklebt ist.

18. Pflanzenschutzvorrichtung nach Patentanspruch 1, **dadurch gekennzeichnet, dass** der faserige Träger die Form eines Topfes hat, dessen Boden entsteht, wenn das freie Ende einer Hülse einwärts gefaltet wird.

19. Pflanzenschutzprozess, bestehend aus dem Platzieren der Vorrichtung, die den Gegenstand von einem der Ansprüche 1 bis 18 bildet, um die Pflanze herum.

## Revendications

1. Dispositif de protection de plants **caractérisé en ce qu'**il se présente sous forme d'au moins un tube constitué d'au moins un support fibreux sulfurisé ou vulcanisé sous forme de feuille contenant des fibres annuelles, ledit dispositif étant biodégradable.

2. Dispositif selon la revendication 1, **caractérisé en ce qu'**il se présente sous forme de deux tubes concentriques.

3. Dispositif selon la revendication 1, **caractérisé en ce que** le tube présente une découpe sur toute sa longueur.

4. Dispositif selon la revendication 1, **caractérisé en ce que** le tube présente au moins une prédécoupe sur toute ou partie de sa longueur.

5. Dispositif selon la revendication 1, **caractérisé en ce que** le support fibreux contient au moins 20 %, avantageusement au moins 50 %, de préférence 75 % de fibres de plantes annuelles en poids.

6. Dispositif de protection de plants selon la revendication 1, **caractérisé en ce que** le support fibreux contient en outre des fibres végétales écrues ou blanchies provenant de résineux ou de feuillus ; et des fibres synthétiques telles que par exemple viscose, seules ou en mélange.

7. Dispositif de protection de plants selon la revendication 1, **caractérisé en ce que** le support fibreux sulfurisé ou vulcanisé a un grammage compris entre 50 et 250 g/m², avantageusement égal à 100 g/m².

8. Dispositif de protection de plants selon la revendication 1, **caractérisé en ce qu'**il a une transparence comprise entre 15 % et 25 %, avantageusement 20 %.

9. Dispositif de protection de plants selon la revendication 1, **caractérisé en ce que** le support fibreux vulcanisé ou sulfurisé est recouvert de produits répulsifs, fongistatiques, fongicides ou bactéricides pulvérisés à sa surface.

10. Dispositif de protection de plants selon la revendication 1, **caractérisé en ce qu'**il se présente sous la forme d'un mandrin obtenu par enroulement en spirale du support fibreux sulfurisé ou vulcanisé.

11. Dispositif de protection de plants selon la revendication 10, **caractérisé en ce que** le mandrin résulte de la superposition de 2 à 15, avantageusement 5 feuilles sulfurisées ou vulcanisées, la face inférieure de chaque feuille étant enduite de colle.

12. Dispositif de protection de plants selon la revendication 11, **caractérisé en ce que** le mandrin a un diamètre d'au moins 120 mm, avantageusement de 360 mm.

13. Dispositif de protection de plants selon la revendication 10, **caractérisé en ce que** le mandrin résulte de la superposition de 2 à 5, avantageusement 3 feuilles sulfurisées ou vulcanisées, la face inférieure de chaque feuille étant enduite de colle.

14. Dispositif de protection de plants selon la revendication 13, **caractérisé en ce que** le mandrin a un grammage compris entre 300 et 400 g/m², avantageusement compris entre 350 et 360 g/m².

15. Dispositif de protection de plants selon l'une des revendications 11 ou 13, **caractérisé en ce que** la colle est constituée exclusivement de polymères biodégradables choisis dans le groupe comprenant l'alcool polyvinylique, le caoutchouc naturel, l'amidon, la gélatine, les polysaccharides, la gomme arabique, l'alginate, la carboxyméthylcellulose.

16. Dispositif de protection de plants selon la revendication 1, **caractérisé en ce que** le support fibreux se présente sous la forme d'une feuille repliable ondulée.

17. Dispositif de protection de plants selon la revendication 16, **caractérisé en ce que** la feuille ondulée est collée entre deux feuilles sulfurisées et/ou vulcanisées.

18. Dispositif de protection de plants selon la revendication 1, **caractérisé en ce que** le support fibreux se présente sous la forme d'un pot, dont le fond est obtenu par repliage sur elle-même de l'extrémité libre d'un mandrin.

19. Procédé de protection de plants consistant à positionner autour dudit plant, le dispositif objet de l'une des revendications 1 à 18.
